# EUROPEAN PATENT SPECIFICATION

(11) **EP 3 175 734 B1**
(45) Date of publication and mention of the grant of the patent: **24.10.2018**
(21) Application number: 16192342.0
(22) Date of filing: 05.10.2016
(51) Int. Cl.: A44B 18/00

(54) **INJECTION MOLDED MUSHROOM TYPE HOOK STRUCTURE AND HOOK STRAP INCLUDING THE SAME**
SPRITZGEGOSSENE PILZKOPFKLETTSTRUKTUR UND KLETTRIEMEN DAMIT
STRUCTURE DE CROCHET DE TYPE CHAMPIGNON MOULÉE PAR INJECTION ET BRIDE À CROCHET DOTÉE DE CELLE-CI

(30) Priority: 03.12.2015 TW 104140462
(43) Date of publication of application: 07.06.2017
(73) Proprietor: Taiwan Paiho Limited, Chang Hwa Hsien (TW)
(72) Inventor: Cheng, Cheng-Wei Allen, Ho Mei Town, Chang Hwa Hsien (TW)
(74) Representative: Steiniger, Carmen

(56) References cited:
- DE-A1-102008 027 860
- DE-A1-102010 044 660
- US-A- 6 162 040

## Description

### Field of the Invention

The present invention relates generally to mechanical fasteners, and more specifically to an injection molded mushroom type hook structure and a hook strap including the same.

### Background of the Invention

Hook-and-loop type fastener is one of the mechanical surface fastener types and it is known as a "Velcro" type fastener. A hook-and-loop type fastener mainly includes a hook strap and a loop strap, wherein the hook strap includes a plastic substrate and a plurality of injection molded hooks formed on a surface of the substrate, and the loop strap has a plurality of fabric loops formed thereon to engage with the hooks on the hook strap so as to proved fastening effect. The hook-and-loop fasteners are wildly used in a variety of fields that need to fasten two separate parts together, such as garment, hats/caps, shoes, personal care product (such as diapers) etc., because of their easy engaging/disengaging characteristic.

The document DE 10 2008 027 860 A1 discloses a hook structure comprising a stem portion and a head portion. The head portion has two protrusions in a first direction and a smaller protrusion and an extended portion in a second direction. All protrusions including the extended portion are slightly curved downward like a hook. Furthermore, all side walls of the stem portion are slanted. The hook structure is produced by a method including the following steps: forming a pre-formed cross-like structure in a hole, wherein a multitude of such holes is provided on a roller, pressing the pre-formed cross-like structures on a tape while passing the tape between rollers, and pressing the heads of the pre-formed cross-like structures down by a heated roller.

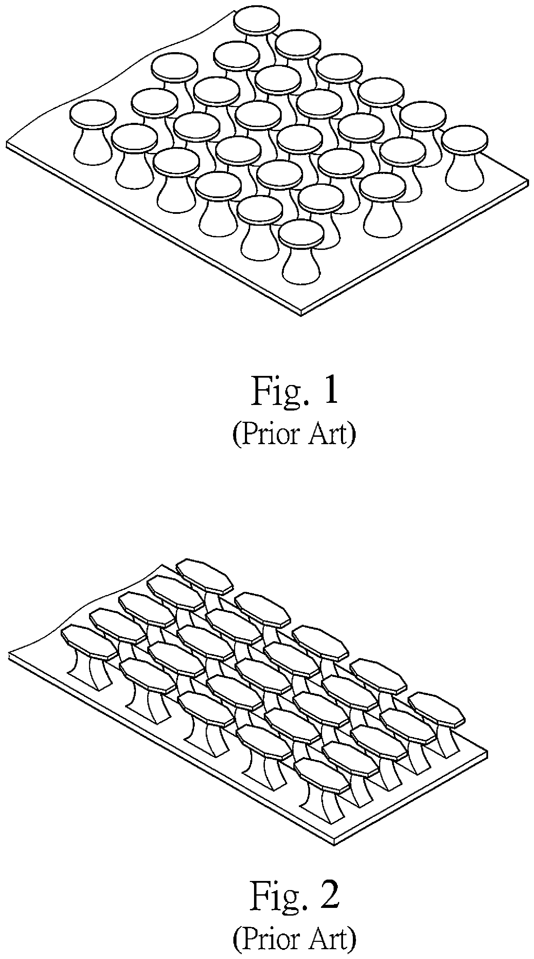

The injection molded mushroom type hook structure is one of the hook structures used in a hook strap of the hook-and-loop fastener. Traditional injection molded mushroom type hook structure includes a substantially cylindrical hook stem and a substantially circular head portion formed at a top end of the cylindrical stem, as illustrated in Fig. 1. However, when engaging the circular-headed mushroom-type hooks illustrated in Fig. 1 with the fabric loops on the loop strap, the effective engaging percentage is relative low because the smooth periphery of the circular head of the hook does not provide protruding portions that can engage with the fabric loops, and thus has a drawback of unable to provide sufficient fastening strength. Additionally, circular-headed mushroom-type hooks can provide effective engaging only when the head of the hooks fully inserted into the fabric loops forming a lockup type engagement. However, although this lockup type of engagement may provide a firm engagement, the fabric loops usually will be destroyed by the hooks during a detaching operation between the hook strap and the loop strap, and after several times of engaging/detaching operations the fastening capability will drop sharply or even loosing the fastening capability because the percentage of the loops been destroyed increases as the engaging/detaching operation number increases. As a result, the effective lifetime of the circular-headed mushroom-type hooks is relative short.

In order to overcome the drawbacks of the circular-headed mushroom-type hooks mentioned above, the inventor of the present application has proposed an improved injection molded mushroom type hook structure in Taiwan Patent No. 1371247. This improved injection molded mushroom type hook structure includes a substantially tetragonal stem and a substantially octagonal head portion form at a top end of the stem, as illustrated in Fig. 2. The polygonal head portion of this hook structure provides a number of protrusions that may engage with the fabric loops to provide effective engagements and a higher engaging percentage with the loops. In addition, because the improved injection molded mushroom type hook structure engages the loops with the protrusions of polygonal head portion, no loops will be destroyed during a detaching operation and thus a longer lifetime for the hook strap may be provided. Although this improved injection molded mushroom type hook structure has above-mentioned advantages, it still has its shortcomings. For instance, the hook-to-loop engaging rate of this mushroom type hook structure is not consistent in every direction. That is, the hook-to-loop engaging rate in a longitudinal direction is higher than the hook-to-loop engaging rate in a transverse direction. Additionally, because the engagement between the head portion and the loops is provided by the protrusions of the head portion, insufficient engagement strength between the hooks and the loops may occur at times.

In view of the above drawbacks and limitations of the existed injection molded mushroom type hook structures, it gives the inventor of the present application a strong motivation to create an injection molded mushroom type hook structure to overcome all these drawbacks and after long and tedious researches and trials, a novel injection molded mushroom type hook structure has finally accomplished.

### Summary of the Invention

One object of the present invention is to provide a novel injection molded mushroom type hook structure that can achieve a better balance between the hook-to-loop engaging rate and the hook-to-loop engagement strength. Additionally, another object of the present invention is to provide an injection molded mushroom type hook structure that has a consistent in both a machine direction (MD) and a transverse direction (CD).

The above objects may be achieved by an injection molded mushroom type hook structure of the present invention. According to a first embodiment of the present invention, an injection molded mushroom type hook structure includes:
a stem portion;
a substantially planar head portion formed at a top end of the stem portion, the head portion including:
   two protrusions each protruding outwardly from a respective one of two opposite sides of the head portion in a first direction along a portion of a length of the side;
   an extended portion extending outwardly from a side of the head portion in a second direction that is perpendicular to the first direction along a substantial length of the side, wherein a free end of the extended portion curves downward slightly as a hook; and
   four connection portions formed at locations where one lateral side of each of the two protrusions adjacent to the extended portion meets the extended portion and the other lateral side of each of the two protrusions meets an adjacent side of the head portion in the second direction.

According to a second embodiment of the present invention, an injection molded mushroom type hook structure includes:
a stem portion;
a substantially planar head portion formed at a top end of the stem portion, the head portion including:
   two protrusions each protruding outwardly from a respective one of two opposite sides of the head portion in a first direction along a portion of a length of the side;
   two extended portions each extending outwardly from a side of the head portion in a second direction that is perpendicular to the first direction along a substantial length of the side, wherein a free end of each of the extended portions curves downward slightly as a hook; and
   four connection portions formed at locations where the lateral sides of each of the two protrusions meet adjacent lateral sides of each of the extended portions.

According to another aspect of the present invention, an injection molded hook strap is provided. The hook strap includes:
a substrate; and
a plurality of injection molded mushroom type hooks integrally formed on a surface of the substrate, wherein each of the injection molded mushroom type hooks comprising:
   a stem portion; and
   a substantially planar head portion formed at a top end of the stem portion, the head portion including:
      two protrusions each protruding outwardly from a respective one of two opposite sides of the head portion in a first direction along a portion of a length of the side;
      an extended portion extending outwardly from a side of the head portion in a second direction that is perpendicular to the first direction along a substantial length of the side, wherein a free end of the extended portion curves downward slightly as a hook; and
      four connection portions formed at locations where one lateral side of each of the two protrusions meets the extended portion and the other lateral side of each of the two protrusions meets an adjacent side of the head portion in the second direction.

According to another embodiment, the hook strap includes:
a substrate; and
a plurality of injection molded mushroom type hooks integrally formed on a surface of the substrate, wherein each of the injection molded mushroom type hooks comprising:
   a stem portion; and
   a substantially planar head portion formed at a top end of the stem portion, the head portion including:
      two protrusions each protruding outwardly from a respective one of two opposite sides of the head portion in a first direction along a portion of a length of the side;
      two extended portions each extending outwardly from a side of the head portion in a second direction that is perpendicular to the first direction along a substantial length of the side, wherein a free end of each of the extended portions curves downward slightly as a hook; and
      four connection portions formed at locations where the lateral sides of each of the two protrusions meet adjacent lateral sides of each of the extended portions.

Features and objects of the present invention other than the above will become clear by reading the description of the present specification with reference to the accompanying drawings.

### Brief Description of the Drawings

For a more complete understanding of the present invention and the advantages thereof, reference is now made to the following description taken in conjunction with the accompanying drawings, wherein:
Fig. 1 is a schematic perspective drawing showing a traditional hook strap including mushroom type hooks;
Fig. 2 is a schematic perspective drawing showing a traditional hook strap including another form of mushroom type hooks;
Fig. 3 is a schematic perspective view showing an injection molded mushroom type hook structure according to a first embodiment of the present invention;
Fig. 4 is an end view of the injection molded mushroom type hook structure of Fig. 3;
Fig.5 is a top plane view of injection molded mushroom type hook structure of Fig. 3;
Fig. 6 is a schematic perspective view showing an injection molded mushroom type hook structure according to a second embodiment of the present invention;
Fig. 7 is an end view of the injection molded mushroom type hook structure of Fig. 6;
Fig.8 is a top plane view of injection molded mushroom type hook structure of Fig. 6;
Fig. 9 is a schematic perspective view showing an injection molded hook strap according to an embodiment of a second aspect of the present invention; and
Fig. 10 is a schematic perspective view showing an injection molded hook strap according to another embodiment of a second aspect of the present invention.

### Detailed Description of the Invention

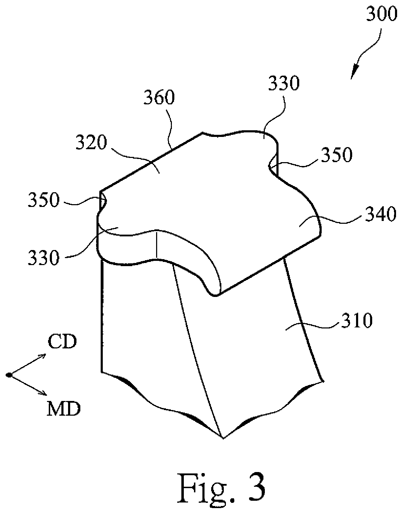

Referring now to figures 3-8 to describe the features of the injection molded mushroom type hook structure according to preferred embodiments of the present invention.

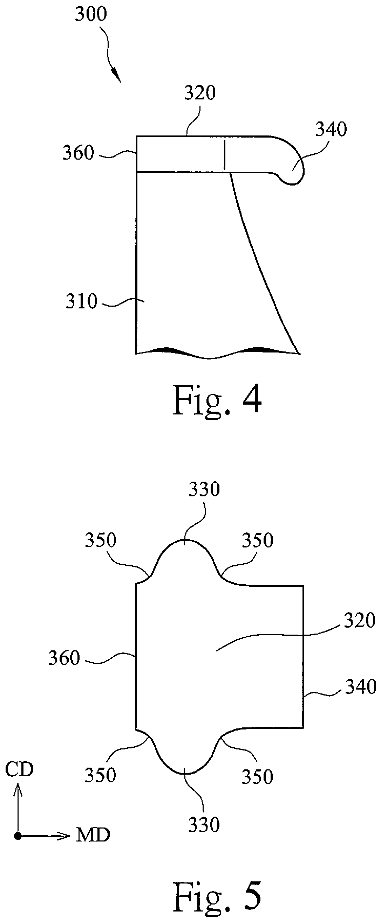

Fig. 3 is a schematic perspective view showing an injection molded mushroom type hook structure 300 according to a first embodiment of the present invention; Fig. 4 is an end view of the injection molded mushroom type hook structure 300 of Fig. 3; and Fig.5 is a top plane view of injection molded mushroom type hook structure 300 of Fig. 3.

As shown in Figs. 3-5, the injection molded mushroom type hook structure 300 according to this embodiment mainly includes a stem portion 310 and a head portion 320 integrally formed at a top end of the stem portion 310. In this embodiment, the stem portion 310 is a substantially tetragonal shape including two straight vertical side walls in a first direction (also referred as a transverse direction) CD, a straight vertical side wall and a slanted vertical side wall in a second direction (also referred as a machine direction) MD, wherein the first direction CD and the second direction MD are perpendicular with each other as shown in Figs. 3-4. The head portion 320 is integrally formed with the stem portion 310 and has a substantially planar shape. The head portion 320 includes two protrusion portions 330, each protrusion portions 330 protruding outwardly from a respective one of two opposite sides of the head portion 320 in the first direction CD along a portion of a length of the side. In this embodiment, the protrusion portion 330 is a semi-circular shape protrusion. Additionally, the head portion 320 includes an extended portion 340 which extends outwardly from a side of the head portion 320 in the second direction MD along a substantial length of the side of the head portion (in this embodiment, the side is at the same side as the slanted vertical side of the stem portion 310) so that the extended portion 340 may have a width substantially the same as the length of the side, wherein a free end of the extended portion 340 curves downward slightly as a hook. The head portion 320 further includes four connection portions 350 which are formed at locations where one lateral side of each of the two protrusions 330 meets the extended portion 340 and the other lateral side of each of the two protrusions meets an adjacent side 360 of the head portion in the second direction. In the embodiment illustrated in Figs. 3-5, the connection portion 350 is a curved connection portion that has a radius of curvature R that is larger than or equal to 0.03 mm (R≧0.03 mm). The head portion 320 of the injection molded mushroom type hook structure 300 has a polygonal shape contour when looked from top as shown in Fig. 5.

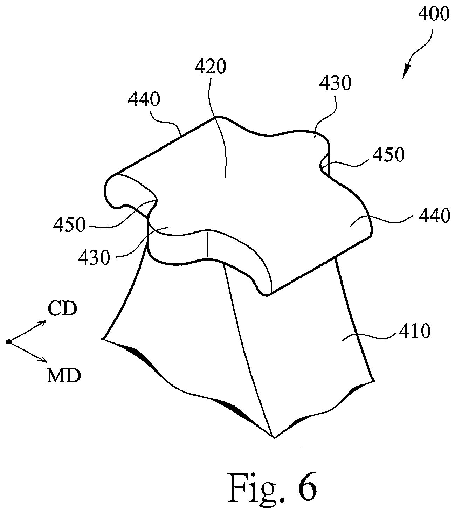

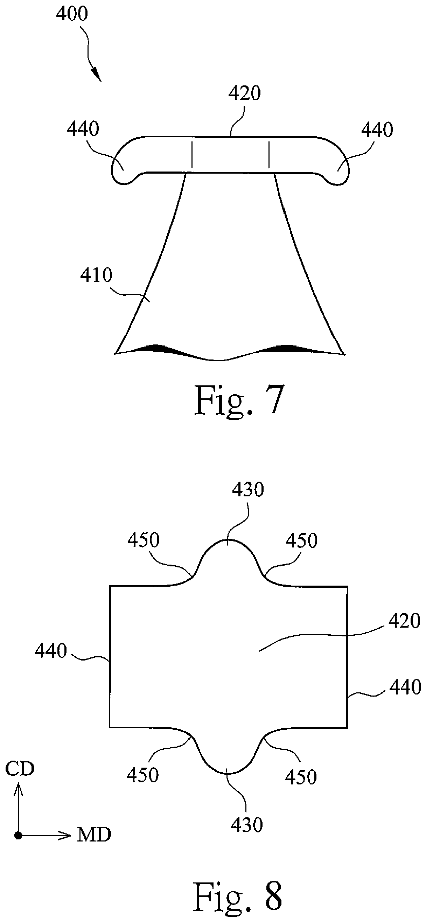

Next, references are made to Figs. 6 to 8 to describe an injection molded mushroom type hook structure 400 according to a second embodiment of the present invention, wherein Fig. 6 is a schematic perspective view showing the injection molded mushroom type hook structure 400; Fig. 7 is an end view of the injection molded mushroom type hook structure 400 of Fig. 6; and Fig.8 is a top plane view of injection molded mushroom type hook structure 400 of Fig. 6.

As illustrated in Figs. 6-8, the injection molded mushroom type hook structure 400 of this embodiment has a structure substantially the same as that of the injection molded mushroom type hook structure 300 of the first embodiment. That is, the injection molded mushroom type hook structure 400 includes a stem portion 410 and a head portion 420 integrally formed at a top end of the stem portion 410. The main differences between the injection molded mushroom type hook structure 400 of this embodiment and the injection molded mushroom type hook structure 300 of the first embodiment reside in that the stem portion 410 of injection molded mushroom type hook structure 400 of this embodiment includes two slanted vertical side walls and in addition to two protrusion portions 430 protruding outwardly from two opposite sides in the first direction CD of the head portion 420, the head portion 420 further includes two extended portions 440 extending outwardly from two opposite sides in the second direction MD and four connection portions 450 formed at locations between lateral sides of adjacent protrusion portion 430 and extended portion 440, as illustrated in Figs. 6 and 8. Similar to the connection portion 350, connection portion 450 is also a curved connection portion that has a radius of curvature R that is larger than or equal to 0.03 mm (R≧0.03 mm).

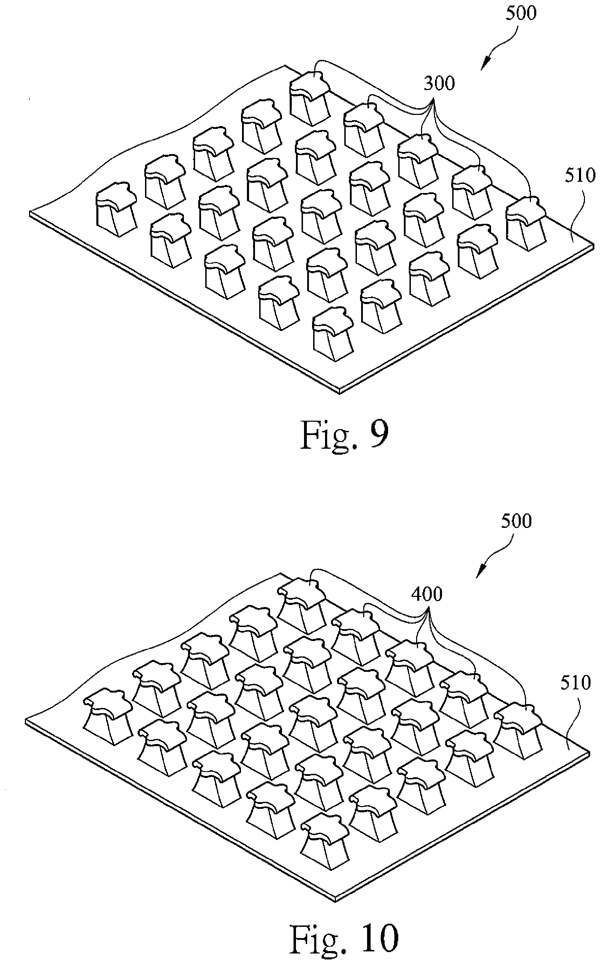

Next, references are made to Figs. 9 and 10 to describe an injection molded hook strap 500 according to a second aspect of the present invention.

As shown in Fig. 9, the hook strap 500 includes a substrate 510 and a plurality of injection molded mushroom type hook structure 300 integrally formed on a surface of the substrate 510. Additionally, another embodiment of the hook strap 500 includes a substrate 510 and a plurality of injection molded mushroom type hook structure 400 integrally formed on a surface of the substrate 510, as illustrated in Fig. 10.

The injection molded mushroom type hook structure 300, 400 and the hook strap 500 according to the present invention may be manufactured by means of plastic injection molding. For instance, injection molded mushroom type hook structure 300, 400 and the hook strap 500 according to the present invention may be manufactured by means of the manufacturing methods described in US 9,259,060 B2.

With the unique structural features described above, the injection molded mushroom type hook structure of the present invention can achieve following advantages:
1. Because the injection molded mushroom type hook structure of the present invention includes structural features for engaging with the loops (i.e., the protrusion portions and the extended portions) in both the first direction (the transverse direction) and the second direction (the machine direction), there are no noticeable difference in hook-to-loop engaging rate between the first and second directions.
2. Because the extended portion of the injection molded mushroom type hook structure of the present invention has a width substantially the same as the length of the side of the head portion from which it extends, the two corners at its free end can engage with loops in directions that offset an angle from the first direction and the second direction (such as, in directions that deviate 45 degree/30 degree from the first direction/second direction), so as to provide an injection molded mushroom type hook structure having a multiple-directional loops-engaging capability.
3. The connection portions formed at locations between adjacent protrusion portions and extended portions cab provide reinforcement effects to the protrusion portions and extended portions so that integrity of the protrusion portions and extended portions would not be deteriorated because of repeating usages after a period of time and thus the effective life of the hook structure may be extended substantially.
4. The free end of the extended portion of the head portion of the injection molded mushroom type hook structure of the present invention is curved downward slightly as a hook so as to provide a more firm, and effective engagement with the loops and to proved a higher hook-to-loop engagement/peeling-off strength.

Although the aspects of the present invention have been described above according to preferred embodiments of the hook structures and hook straps including the hook structures illustrated in the accompanying drawings, this does not mean that the scope of the present invention is limited to specific structures described above. In fact, there exist various modifications and variations under the principle disclosed above.

It will be apparent to people skilled in this art that many modifications can be made to the disclosed structures without departing from the true scope of the invention defined by the appended claims.

## Claims

1. A mushroom type hook structure (300) comprising:
a stem portion (310);
a substantially planar head portion (320) formed at a top end of the stem portion (310), the head portion comprising:
two protrusions (330) each protruding outwardly from a respective one of two opposite sides of the head portion (320) in a first direction (CD) along a portion of a length of the side;
an extended portion (340) extending outwardly from a side of the head portion (320) in a second direction (MD) that is perpendicular to the first direction (CD) along a substantial length of the side, wherein a free end of the extended portion (340) curves downward slightly as a hook; and
four connection portions (350) formed at locations where one lateral side of each of the two protrusions (330) adjacent to the extended portion (340) meets the extended portion (340) and the other lateral side of each of the two protrusions (330) meets an adjacent side of the head portion (320) in the second direction (MD) **characterized in that**
the mushroom type hook structure (300) is injection molded and the stem portion (310) is of substantially tetragonal shape and includes two straight vertical side walls in a first direction (CD) and a straight vertical side wall and a slanted vertical side wall in a second direction (MD), wherein the first direction (CD) and the second direction (MD) are perpendicular with each other.

2. A mushroom type hook structure (400) comprising:
a stem portion (410);
a substantially planar head portion (420) formed at a top end of the stem portion (410), the head portion comprising:
two protrusions (430) each protruding outwardly from a respective one of two opposite sides of the head portion (420) in a first direction (CD) along a portion of a length of the side;
two extended portions (440) each extending outwardly from a side of the head portion (420) in a second direction (MD) that is perpendicular to the first direction (CD) along a substantial length of the side, wherein a free end of each of the extended portions (440) curves downward slightly as a hook; and
four connection portions (450) formed at locations where the lateral sides of each of the two protrusions (430) meet adjacent lateral sides of each of the extended portions (440) **characterized in that**
the mushroom type hook structure (400) is injection molded and the stem portion (410) is of substantially tetragonal shape and includes two straight vertical side walls in a first direction (CD) and two slanted vertical side walls in a second direction (MD), wherein the first direction (CD) and the second direction (MD) are perpendicular with each other.

3. The mushroom type hook structure according to claim 1 or 2, wherein the connection portion (350, 450) is a curved connection portion that has a radius of curvature R that is larger than or equal to 0.03 mm (R≧0.03 mm).

4. The mushroom type hook structure according to claim 1 or 2, wherein the stem portion (310, 410) and the head portion (320, 420) are integrally formed as a single entity.

5. The mushroom type hook structure according to claim 1 or 2, wherein the head portion (320, 420) has a polygonal contour.

6. An injection molded hook strap (500) comprising:
a substrate (510); and
a plurality of injection molded mushroom type hooks (300, 400) according to claim 1 or 2 integrally formed on a surface of the substrate (510).

7. An injection molded hook strap according to claim 6, wherein the connection portion is a curved connection portion (350, 450) that has a radius of curvature R that is larger than or equal to 0.03 mm (R≧0.03 mm).

8. An injection molded hook strap according to claim 6, wherein the stem portion (310, 410) and the head portion (320, 420) are integrally formed as a single entity.

9. An injection molded hook strap according to claim 6, wherein the head portion (320, 420 has a polygonal contour.

## Patentansprüche

1. Pilzkopfhakenstruktur (300), die
einen Stielabschnitt (310) und
einen im Wesentlichen flachen Kopfabschnitt (320), welcher an einem oberen Ende des Stielabschnittes (310) ausgebildet ist, aufweist, wobei der Kopfabschnitt aus
zwei Ausbuchtungen (330), welche jeweils von je einer von zwei gegenüberliegenden Seitenflächen des Kopfabschnitts (320) in einer ersten Richtung (CD) entlang eines Teilstücks einer Länge der Seitenfläche nach außen ragen;
einem verlängerten Abschnitt (340), welcher sich von einer Seitenfläche des Kopfabschnitts (320) in einer zweiten Richtung (MD), die senkrecht zu der ersten Richtung (CD) verläuft, entlang eines wesentlichen Teilstücks der Seitenfläche nach außen erstreckt, wobei sich ein freies Ende des verlängerten Abschnitts (340) als ein Haken leicht nach unten krümmt; und
vier Verbindungsabschnitten (350), die an Positionen ausgebildet sind, wo eine laterale Seitenfläche von jeder der beiden Ausbuchtungen (330) neben dem verlängerten Abschnitt (340) auf den verlängerten Abschnitt (340) trifft und die andere laterale Seitenfläche von jeder der beiden Ausbuchtungen (330) auf eine angrenzende Seitenfläche des Kopfabschnitts (320) in der zweiten Richtung (MD) trifft,
besteht, **dadurch gekennzeichnet, dass**
die Pilzkopfhakenstruktur (300) spritzgegossen ist und der Stielabschnitt (310)
eine im Wesentlichen tetragonale Form hat und
zwei gerade vertikale Seitenwände in einer ersten Richtung (CD) und eine geneigte vertikale Seitenwand in einer zweiten Richtung (MD) aufweist, wobei die erste Richtung (CD) und die zweite Richtung (MD) senkrecht zueinander verlaufen.

2. Pilzkopfhakenstruktur (400), die
einen Stielabschnitt (410) und
einen im Wesentlichen flachen Kopfabschnitt (420), welcher an einem oberen Ende des Stielabschnittes (410) ausgebildet ist, aufweist, wobei der Kopfabschnitt aus
zwei Ausbuchtungen (430), welche jeweils von je einer von zwei gegenüberliegenden Seitenflächen des Kopfabschnitts (420) in einer ersten Richtung (CD) entlang eines Teilstücks der Länge der Seitenfläche nach außen ragen;
zwei verlängerten Abschnitten (440), welche sich jeweils von einer Seitenfläche des Kopfabschnitts (420) in einer zweiten Richtung (MD), die senkrecht zu der ersten Richtung (CD) verläuft, entlang eines wesentlichen Teilstücks der Seitenfläche nach außen erstrecken, wobei sich jeweils ein freies Ende der verlängerten Abschnitte (440) als ein Haken leicht nach unten krümmt; und
vier Verbindungsabschnitten (450), die an Positionen ausgebildet sind, wo die lateralen Seitenflächen von jeder der beiden Ausbuchtungen (430) auf angrenzende laterale Seitenflächen von jeder der verlängerten Abschnitte (440) treffen,
besteht, **dadurch gekennzeichnet, dass**
die Pilzkopfhakenstruktur (400) spritzgegossen ist und der Stielabschnitt (410) eine im Wesentlichen tetragonale Form hat und
zwei gerade vertikale Seitenwände in einer ersten Richtung (CD) und zwei geneigte vertikale Seitenwände in einer zweiten Richtung (MD) umfasst, wobei die erste Richtung (CD) und die zweiten Richtung (MD) senkrecht zueinander verlaufen.

3. Pilzkopfhakenstruktur gemäß einem der Ansprüche 1 oder 2, wobei der Verbindungsabschnitt (350, 450) ein gewölbter Verbindungsabschnitt mit einem Krümmungsradius R größer oder gleich 0,03 mm (R≧0,03 mm) ist.

4. Pilzkopfhakenstruktur gemäß einem der Ansprüche 1 oder 2, wobei der Stielabschnitt (310, 410) und der Kopfabschnitt (320, 420) vollständig als eine Einheit ausgebildet sind.

5. Pilzkopfhakenstruktur gemäß einem der Ansprüche 1 oder 2, wobei der Kopfabschnitt (320, 420) einen polygonalen Umriss hat.

6. Spritzgegossenes Hakenband (500), das
eine Trägerschicht (510) und
mehrere spritzgegossene pilzförmige Haken (300, 400) gemäß einem der Ansprüche 1 oder 2 aufweist, welche vollständig auf einer Oberfläche der Trägerschicht (510) ausgebildet sind.

7. Spritzgegossenes Hakenband gemäß Anspruch 6, wobei der Verbindungsabschnitt ein gewölbter Verbindungsabschnitt (350, 450) mit einem Krümmungsradius R größer oder gleich 0,03 mm (R≧0,03 mm) ist.

8. Spritzgegossenes Hakenband gemäß Anspruch 6, wobei der Stielabschnitt (310, 410) und der Kopfabschnitt (320, 420) vollständig als eine Einheit ausgebildet sind.

9. Spritzgegossenes Hakenband gemäß Anspruch 6, wobei der Kopfabschnitt (320, 420) einen polygonalen Umriss hat.

## Revendications

1. Une structure de crochet de type champignon (300) comprenant :
une section de pied (310) ;
une section de tête (320) principalement plane formée à un bout supérieur de la section de pied (310),
la section de tête comprenant :
deux saillies (330), chacune saillant vers l'extérieur respectivement de l'une de deux côtés opposés de la section de tête (320) dans une première direction (CD) le long d'une partie du côté ;
une section étendue (340) s'étendant vers l'extérieur d'un côté de la section de tête (320) dans une seconde direction (MD), qui s'allonge perpendiculairement à la première direction (CD), le long d'une partie principale du côté, une extrémité libre de la section étendue (340) étant courbée légèrement vers le bas en tant qu'un crochet ; et
quatre sections de connexion (350) formées aux positions où un côté latéral de chacune des deux saillies (330), étant adjacent à la section étendue (340), rencontre la section étendue (340), et l'autre côté latéral de chacune des deux saillies (330) rencontre un côté adjacent de la section de tête (320) dans la seconde direction (MD), **caractérisée en ce que**
la structure de crochet de type champignon (300) est moulée par injection et la section de pied (310)
est principalement en forme tétragone et
inclue deux parois latérales verticales droites dans une première direction (CD) et une paroi latérale verticale droite et une paroi verticale inclinée dans une seconde direction (MD), la première direction (CD) et la seconde direction (MD) s'allongeant perpendiculairement.

2. Une structure de crochet de type champignon (400) comprenant :
une section de pied (410) ;
une section de tête (420) principalement plane formée à un bout supérieur de la section de pied (410),
la section de tête comprenant :
deux saillies (430), chacune saillant vers l'extérieur respectivement de l'une de deux côtés opposés de la section de tête (420) dans une première direction (CD) le long d'une partie du côté ;
deux sections étendues (440) s'étendant vers l'extérieur d'un côté de la section de tête (420) dans une seconde direction (MD), qui s'allonge perpendiculairement à la première direction (CD), le long d'une partie principale du côté, une extrémité libre de chacune des sections étendues (440) étant courbée légèrement vers le bas en tant qu'un crochet ; et
quatre sections de connexion (450) formées aux positions où les côtés latéraux de chacune des deux saillies (430) rencontrent les côtés latéraux adjacents de chacune des sections étendues (440), **caractérisée en ce que**
la structure de crochet de type champignon (400) est moulée par injection et la section de pied (410)
est principalement en forme tétragone et
inclue deux parois latérales verticales droites dans une première direction (CD) et deux parois verticales inclinées dans une seconde direction (MD), la première direction (CD) et la seconde direction (MD) s'allongeant perpendiculairement.

3. La structure de crochets de type champignon selon l'une des revendications 1 ou 2, la section de connexion (350, 450) étant une section de connexion inclinée avec un rayon de courbure R supérieur ou égal à 0,03 mm (R≧0,03mm).

4. La structure de crochets de type champignon selon l'une des revendications 1 ou 2, la section de pied (310, 410) et la section de tête (320, 420) étant formées entièrement en tant qu'une seule entité.

5. La structure de crochets de type champignon selon l'une des revendications 1 ou 2, la section de tête (320, 420) ayant un contour polygonal.

6. Un bride à crochets moulé par injection (500) comprenant :
un support (510) ; et
une pluralité de crochets de type champignon moulés par injection (300, 400) selon l'une des revendications 1 ou 2 formée entièrement sur la surface du support (510).

7. Un bride à crochets moulé par injection selon la revendication 6, la section de connexion étant une section de connexion inclinée (350, 450) avec un rayon de courbure R supérieur ou égal à 0,03 mm (R≧0,03mm).

8. Un bride à crochets moulé par injection selon la revendication 6, la section de pied (310, 410) et la section de tête (320, 420) étant formées entièrement en tant qu'une seule entité.

9. Un bride à crochets moulé par injection selon la revendication 6, la section de tête (320, 420) ayant un contour polygonal.
